# FASCICULE DE BREVET EUROPEEN

(11) **EP 3 662 648 B1**
(45) Date de publication et mention de la délivrance du brevet: **24.03.2021**
(21) Numéro de dépôt: 18765949.5
(22) Date de dépôt: 01.08.2018
(51) Int. Cl.: H04M 3/42, H04M 3/54

(54) **RÉSEAU TÉLÉPHONIQUE COMMUTE ET PROCÉDÉ DE GESTION D'UNE LIGNE ABONNÉE DANS UN TEL RÉSEAU**
FERNSPRECHWÄHLNETZ UND VERFAHREN ZUR VERWALTUNG EINER TEILNEHMERLEITUNG IN EINEM SOLCHEN NETZ
SWITCHED TELEPHONE NETWORK AND METHOD FOR MANAGING A SUBSCRIBER LINE IN SUCH A NETWORK

(30) Priorité: 04.08.2017 FR 1757522
(43) Date de publication de la demande: 10.06.2020
(73) Titulaire: Fawzy, Anas, 75116 Paris (FR)
(72) Inventeur: Fawzy, Anas, 75116 Paris (FR)
(74) Mandataire: Roman, Alexis
(86) Numéro de dépôt international: PCT/FR2018/051982
(87) Numéro de publication internationale: WO 2019/025731

(56) Documents cités:
- WO-A2-96/39786
- GB-A- 2 440 813

## Description

### Domaine technique de l'invention

L'invention a pour objet un réseau téléphonique commuté. Elle a également pour objets un procédé de gestion d'une ligne abonnée dans un réseau téléphonique commuté et un boîtier pour la mise en œuvre de ce procédé.

Elle concerne notamment le domaine technique des architectures de réseaux téléphoniques commutés permettant principalement à des abonnés d'émettre et/ou de recevoir des appels téléphoniques depuis un poste téléphonique fixe et permettant subsidiairement à des abonnés de récupérer d'autres attributs privés de connexion internet pour accéder à des services complémentaires.

### État de la technique.

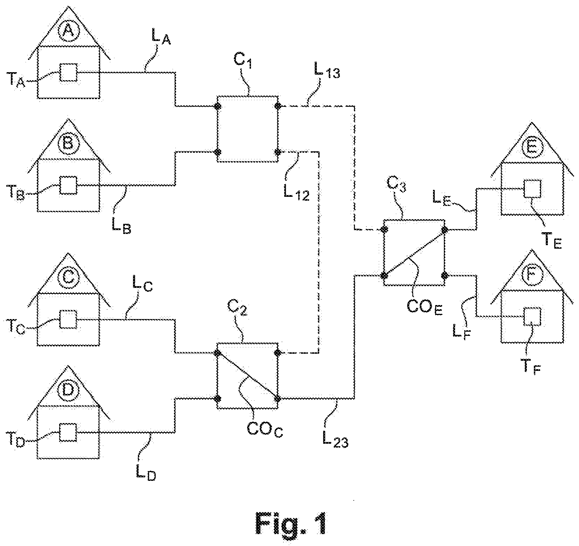

Le Réseau Téléphonique Commuté (RTC) permet de mettre en relation deux postes d'abonnés. C'est le réseau historique des téléphones fixes. La figure 1 schématise l'agencement des principaux éléments constitutifs d'un RTC connu de l'homme du métier. Le RTC est organisé en trois sous-parties : commutation, distribution et transmission.

La commutation permet la mise en relation temporaire entre les postes abonnés.

La distribution permet de relier les postes téléphoniques fixes abonnés à un commutateur. Cette liaison peut être analogique ou numérique.

A titre d'exemple illustratif, dans le RTC de la figure 1, le commutateur C₁ est relié au poste téléphonique fixe T_{A} d'un abonné A par une ligne abonnée L_{A} et au poste téléphonique fixe T_{B} d'un abonné B par une ligne abonnée L_{B}. Le commutateur C₂ est relié au poste téléphonique fixe T_{c} d'un abonné C par une ligne abonnée L_{C} et au poste téléphonique fixe T_{D} d'un abonné D par une ligne abonnée L_{B}. Le commutateur C₃ est relié au poste téléphonique fixe T_{E} d'un abonné E par une ligne abonnée L_{E} et au poste téléphonique fixe T_{F} d'un abonné F par une ligne abonnée L_{F}. Chaque ligne abonnée est associée à un numéro de téléphone attribué au poste téléphonique fixe correspondant : la ligne abonnée L_{A} est associée au numéro de téléphone du poste téléphonique fixe T_{A}, la ligne abonnée L_{B} est associée au numéro de téléphone du poste téléphonique fixe T_{B}, la ligne abonnée L_{C} est associée au numéro de téléphone du poste téléphonique fixe T_{C}, la ligne abonnée L_{D} est associée au numéro de téléphone du poste téléphonique fixe TD, la ligne abonnée L_{E} est associée au numéro de téléphone du poste téléphonique fixe T_{E} et la ligne abonnée L_{F} est associée au numéro de téléphone du poste téléphonique fixe T_{F}.

La transmission permet de relier les commutateurs C₁, C₂, C₃ entre eux au moyen de lignes de commutation L₁₂, L₁₃, L₂₃, qui peuvent consister en des fibres optiques, faisceaux hertziens, paires de fils de cuivre, etc.

A titre d'exemple illustratif, l'abonné C relié à un commutateur C₂ désire appeler l'abonné E relié à un commutateur C₃.

L'abonné C décroche son poste téléphonique T_{C} dans l'intention d'appeler son correspondant E. Le commutateur C₂ détecte le décroché et avertit l'abonné C, par une tonalité continue.

L'abonné C compose le numéro téléphonique de l'abonné E. Cette numérotation provoque par exemple des coupures de ligne calibrées ou la transmission signaux (chaque chiffre pouvant être codé par une paire de fréquences) sur la ligne abonnée L_{C}.

Le commutateur C₂ décode et analyse cette signalisation pour déterminer si le numéro téléphonique de l'abonné E est complet. Dès que c'est le cas, le commutateur C₂ détermine la destination de l'appel. Les premiers chiffres du numéro composé donnent en général l'adresse de routage du commutateur C₃.

Après avoir localisé le commutateur C₃, le commutateur C₂ établit avec lui une liaison commutée L₂₃ temporaire, numérique ou analogique, et lui transmet le numéro téléphonique de l'abonné E. Le commutateur C₃ analyse le numéro transmis et détecte que l'appel est destiné à l'abonné E. A cet effet, chaque commutateur est pourvu d'une base de données comprenant une table dans laquelle sont associés les numéros de téléphone dont ils ont la gestion et les lignes abonnées correspondantes.

Lorsque l'abonné E est disponible (i.e. que son poste téléphonique T_{E} n'est pas occupé), le commutateur C₃ renvoie un message de signalisation vers le commutateur C₂, au travers de la liaison commutée L₂₃, indiquant la progression de l'appel. Le commutateur C₂ réserve une connexion COc entre la liaison commutée L₂₃ et la ligne d'abonné L_{C}. De même, le commutateur C₃ réserve une connexion CO_{E} entre la liaison commutée L₂₃ et la ligne d'abonné L_{E}. Le commutateur C₃ active également la sonnerie du poste téléphonique T_{E} et génère une tonalité de sonnerie vers le commutateur C₂. L'abonné C entend alors la tonalité correspondant à un retour de sonnerie.

Lorsque l'abonné E décroche son poste téléphonique T_{E}, le commutateur C₃ détecte ce décroché et transmet au commutateur C₂ un signal lui signifiant le début de la communication : le commutateur C₂ peut alors démarrer la taxation de l'abonné C. Pendant toute la communication, les commutateurs C₂ et C₃ surveillent si un des deux intervenants C ou E raccroche ou si une éventuelle défaillance coupe la communication en cours.

Dans la configuration de la figure 1, chaque ligne abonnée L_{A}, L_{B}, L_{C}, L_{D}, L_{E}, L_{F} étant rattachée à une adresse physique (adresse postale de l'habitation de chaque abonné A, B, C, D, E, F), on considère que chaque numéro de téléphone fixe est également rattaché une adresse physique.

A titre d'exemple toujours, prenons le cas où l'abonné A loue tout ou une partie de son local à l'abonné C, cette location étant par exemple réalisée depuis une plateforme du type Airbnb®. Durant cette période, l'abonné C ne peut plus recevoir d'appel sur son poste téléphonique fixe T_{C}. Et si l'abonné A l'autorise à utiliser son poste téléphonique fixe T_{A}, c'est l'abonné A qui sera taxé. On comprend donc que cette situation est préjudiciable pour les deux abonnés A et C.

Le renvoi d'appels permet à un abonné appelé de renvoyer ses appels entrants vers un autre téléphone fixe ou mobile. L'abonné C peut par exemple demander à ce que ses appels entrant soient renvoyés vers le numéro du poste téléphonique fixe T_{A}. L'abonné A doit dans ce cas communiquer son numéro à l'abonné C, ce qu'il peut refuser pour diverses raisons. En outre, la technique de renvoi d'appels ne permet pas de facturer l'abonné C lorsqu'il passe des appels depuis le poste téléphonique fixe T_{A}.

Le document brevet GB2440813 (AVAYA TECH LLC) décrit un réseau téléphonique commuté permettant à un abonné associé à une ligne fixe de récupérer ses attributs de connexion sur une autre ligne fixe. Le partage de cette autre ligne fixe apparaît toutefois complexe et peu sécurisée.

Le document brevet WO96/39786 (ERICSSON) décrit un boîtier amovible permettant d'émuler une ligne fixe sur un terminal sans fil. Ce boîtier ne permet toutefois pas de partager une ligne abonnée entre plusieurs postes.

L'invention vise à remédier à cet état des choses. En particulier, un objectif de l'invention est de permettre à un abonné de bénéficier des attributs de son poste téléphonique fixe (numéro d'appel et taxation) ailleurs que dans son habitation.

Un autre objectif de l'invention est de pouvoir partager de manière simple et sécurisée, une ligne abonnée entre plusieurs postes téléphoniques fixes disposant chacun de son propre numéro d'appel.

### Divulgation de l'invention.

La solution proposée par l'invention est un réseau téléphonique commuté (RTC) dans lequel :
- un premier commutateur est connecté à une première ligne abonnée adaptée pour être reliée à un premier poste téléphonique fixe installé dans un local d'un premier abonné, ladite première ligne abonnée étant associée à un numéro de téléphone attribué audit premier poste téléphonique,
- un deuxième commutateur comprenant une base de données dans laquelle est enregistré un numéro de téléphone attribué à un deuxième poste téléphonique fixe d'un deuxième abonné,
- un boîtier amovible connecté sur la première ligne abonnée, dans le local où est installé le premier poste téléphonique, le deuxième poste téléphonique étant connecté audit boîtier,
- un moyen pour transmettre au premier commutateur une requête de présence contenant le numéro de téléphone attribué au deuxième poste téléphonique,
- la réception de la requête de présence par le premier commutateur entraîne la mise en œuvre automatique d'un processus informatique logique impliquant le deuxième commutateur et aboutissant au partage de la première ligne abonnée, au travers du boîtier, entre le numéro de téléphone attribué au premier poste téléphonique et le numéro de téléphone attribué au deuxième poste téléphonique.

En reprenant l'exemple précité, l'abonné C peut maintenant utiliser son propre téléphone fixe, chez l'abonné A, au travers de la ligne abonnée de ce dernier. L'abonné A peut continuer à utiliser son propre téléphone fixe. La ligne abonnée est ainsi facilement partagée entre les deux postes téléphoniques fixes qui disposent chacun de leur propre numéro d'appel. La ligne abonnée de l'abonné C devient portable et n'est plus attachée uniquement à l'adresse fixe dudit abonné C. En d'autres termes, le numéro de téléphone de l'abonné C n'a plus besoin d'être rattaché à une ligne abonnée fixe ou classique, mais peut maintenant être rattaché à n'importe quelle autre ligne abonnée fixe sur laquelle est connecté le boîtier.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Avantageusement, la réception de la requête de présence par le premier commutateur entraîne l'émission d'un signal commandant le deuxième commutateur pour qu'il renvoie vers ledit premier commutateur les appels entrants correspondant au numéro de téléphone attribué au deuxième poste téléphonique.
- Le deuxième commutateur établit préférentiellement une liaison commutée temporaire entre les deux commutateurs lorsque ledit deuxième commutateur reçoit un appel entrant correspondant au numéro de téléphone attribué au deuxième poste téléphonique.
- La requête de présence peut être émise par le boitier au travers de la première ligne abonnée.
- Dans une variante de réalisation, la requête de présence est émise par le deuxième commutateur, en réponse à une instruction de commande émise par un serveur informatique distant. Dans ce cas, l'instruction de commande peut être émise par le serveur informatique distant, en réponse à un signalement et une authentification du deuxième abonné auprès dudit serveur.
- Avantageusement, la réception de la requête de présence par le premier commutateur entraîne l'émission d'un signal commandant le deuxième commutateur pour qu'il mette en œuvre automatiquement un processus de taxation du deuxième abonné lorsqu'un appel sortant est émis depuis le deuxième poste téléphonique connecté au boîtier.
- Avantageusement, le décroché du deuxième poste téléphonique entraîne la transmission d'un signal émis par le boîtier, au premier commutateur, et au travers de la première ligne abonnée ; la réception de ce signal par le premier commutateur entraîne la mise en œuvre automatique d'un processus informatique logique aboutissant à l'établissement d'une liaison commutée temporaire entre les deux commutateurs de sorte que le deuxième commutateur traite les appels sortants émis depuis le deuxième poste téléphonique connecté au boîtier.
- Selon un mode de réalisation, le numéro de téléphone attribué au deuxième poste téléphonique est enregistré dans un support amovible sécurisé ; le boîtier étant équipé d'une interface de connexion adaptée pour recevoir le support amovible sécurisé.
- Avantageusement, l'insertion du support amovible sécurisé dans l'interface de connexion entraine la transmission de la requête de présence par le boîtier.
- Avantageusement, le retrait du support amovible sécurisé de l'interface de connexion entraine la mise en œuvre automatique d'un processus informatique logique conduisant à l'arrêt du partage de la première ligne abonnée.
- Dans une variante de réalisation, la déconnexion du boîtier de la première ligne abonnée entraine la mise en œuvre automatique d'un processus informatique logique conduisant à l'arrêt du partage de ladite première ligne abonnée.
- Le boîtier se présente avantageusement sous la forme d'une prise gigogne, et comprend : une fiche mâle adaptée pour se connecter dans une fiche femelle d'une prise murale située dans le local du premier abonné, laquelle prise murale est reliée à la première ligne abonnée ; une fiche femelle adaptée pour recevoir la fiche mâle d'une prise en T liée au premier poste téléphonique ; une connectique à laquelle se connecte le deuxième poste téléphonique.
- Dans une variante de réalisation, le boîtier se présente sous la forme d'une prise gigogne, et comprend : une fiche mâle adaptée pour se connecter dans une fiche femelle d'une prise murale située dans le local du premier abonné, laquelle prise murale est reliée à la première ligne abonnée ; une connectique à laquelle se connecte le premier poste téléphonique ; une connectique à laquelle se connecte le deuxième poste téléphonique.

Un autre aspect de l'invention concerne un procédé de gestion d'une ligne abonnée dans un réseau téléphonique commuté, lequel réseau comprend:
- un premier commutateur connecté à une première ligne abonnée adaptée pour être reliée à un premier poste téléphonique fixe installé dans un local d'un premier abonné, ladite première ligne abonnée étant associée à un numéro de téléphone attribué audit premier poste téléphonique,
- un deuxième commutateur comprenant une base de données dans laquelle est enregistré un numéro de téléphone attribué à un deuxième poste téléphonique fixe d'un deuxième abonné.

Ce procédé comprend les étapes consistant à :
- connecter un boîtier amovible sur la première ligne abonnée, dans le local où est installé le premier poste téléphonique,
- connecter le deuxième poste téléphonique au boîtier,
- transmettre au premier commutateur une requête de présence contenant le numéro de téléphone attribué au deuxième poste téléphonique,
- la réception de la requête de présence par le premier commutateur entraîne la mise en œuvre automatique d'un processus informatique logique impliquant le deuxième commutateur et aboutissant au partage de la première ligne abonnée, au travers du boîtier, entre le numéro de téléphone attribué au premier poste téléphonique et le numéro de téléphone attribué au deuxième poste téléphonique.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 précitée schématise l'agencement d'éléments constitutifs d'un réseau téléphonique commuté (RTC) connu de l'art antérieur,
- la figure 2 schématise l'agencement de différents composants d'un commutateur,
- la figure 3 illustre un boîtier conforme à l'invention, selon un premier mode de réalisation,
- la figure 4 illustre un boîtier conforme à l'invention, selon un second mode de réalisation,
- la figure 5 schématise l'agencement de différents composants d'un boîtier conforme l'invention,
- la figure 6 illustre un réseau téléphonique commuté (RTC) conforme à l'invention,
- la figure 7 illustre différentes étapes mises en œuvre dans le procédé objet de l'invention, dans le RTC de la figure 6,
- la figure 8 illustre un réseau téléphonique commuté (RTC) conforme à second mode de réalisation l'invention,
- la figure 9 illustre différentes étapes mises en œuvre dans le procédé objet de l'invention, dans le RTC de la figure 8.

### Modes préférés de réalisation de l'invention.

Le procédé objet de l'invention consiste en une séquence cohérente d'étapes permettant d'aboutir à un résultat souhaité. Ces étapes engendrent des manipulations d'éléments physiques, notamment des signaux (électriques ou magnétiques) capables d'être stockés, transférés, combinés, comparés, etc.

Le procédé est mis en œuvre par l'intermédiaire d'applications informatiques exécutées par des appareils informatiques. Par souci de clarté, il faut comprendre au sens de l'invention que *« l'appareil fait quelque chose »* signifie « *l'application informatique exécutée par le processeur ou microprocesseur de l'appareil fait quelque chose* ». Tout comme « *l'application informatique fait quelque chose* » signifie « *l'application informatique exécutée par le processeur ou microprocesseur de l'appareil fait quelque chose ».*

Encore par souci de clarté, la présente invention peut faire référence à un ou plusieurs « *processus informatiques logiques* ». Ces derniers correspondent aux actions ou résultats obtenus par l'exécution d'instructions de différentes applications informatiques. Aussi, il faut également comprendre au sens de l'invention que « *un processus informatique logique fait quelque chose* » signifie *« les instructions d'une ou plusieurs applications informatiques exécutées par un ou plusieurs processeurs ou microprocesseurs font quelque chose ».*

En se rapportant à la figure 1, chaque commutateur Cᵢ du RTC comprend notamment un ou plusieurs processeurs ou microprocesseurs 50, une ou plusieurs mémoires 51, une interface réseau 52, une ou plusieurs matrices de commutation 53, une base de donnée 54, qui sont mutuellement connectées via un bus 55. Une ou plusieurs applications informatiques - ou programmes informatiques - sont enregistrées dans la ou les mémoires 51 et dont les instructions, lorsqu'elles sont exécutées par le ou les processeurs 50 permettent de réaliser les fonctionnalités décrites plus avant dans la description.

L'interface réseau 52 est une interface de communication filaire ou sans-fil permettant aux commutateurs C₁, C₂ et C₃ de communiquer entre eux et/ou de communiquer avec un ou plusieurs serveurs informatiques distants, via un réseau de communication avec des technologies de réseau telles que, mais sans s'y limiter, Ethernet, GSM, EDGE, 2G, 3G, 4G, etc. Le réseau peut également être du type réseau de télécommunication sécurisé (Internet, ...) ou réseau privé virtuel (VPN pour l'anglais Virtual Private Network) pour sécuriser l'échange de données entre les commutateurs C₁, C₂ et C₃ et/ou avec le ou les serveurs informatiques distants. Cet échange de données peut également être réalisé au travers des liaisons commutées L₁₂, L₁₃, L₂₃.

La matrice de commutation 53 permet de créer une connexion entre une liaison commutée et une ligne d'abonné, en fonction d'instructions exécutées par le ou les processeurs 50.

La base de données 54 peut être hébergée directement dans le commutateur Cᵢ. Elle peut également être hébergée hors du commutateur Cᵢ, par exemple dans un serveur informatique distant dudit commutateur ou dans un réseau de serveurs type Cloud Computing.

Dans la base de données 54 est enregistrée une table dans laquelle sont associés les numéros de téléphone dont ils ont la gestion et les lignes abonnées correspondantes. Par exemple, dans le RTC de la figure 1 :
- la table enregistrée dans la base de données du commutateur C₁ associe :
   ∘ le numéro du poste téléphonique fixe T_{A} à la ligne abonnée L_{A};
   ∘ le numéro du poste téléphonique fixe T_{B} à la ligne abonnée L_{B}.
- la table enregistrée dans la base de données du commutateur C₂ associe :
   ∘ le numéro du poste téléphonique fixe T_{C} à la ligne abonnée L_{C};
   ∘ le numéro du poste téléphonique fixe T_{D} à la ligne abonnée L_{D}.
- la table enregistrée dans la base de données du commutateur C₃ associe :
   ∘ le numéro du poste téléphonique fixe T_{E} à la ligne abonnée L_{E};
   ∘ le numéro du poste téléphonique fixe T_{F} à la ligne abonnée L_{F}.

L'invention fait intervenir l'utilisation d'un boîtier B amovible adapté pour se connecter sur une ligne abonnée, dans le local (habitation, pièce, bureau, ...) où est installé le poste téléphonique fixe relié à ladite ligne abonnée. Pour reprendre l'exemple précédent, le boîtier B est installé dans le local de l'abonné A.

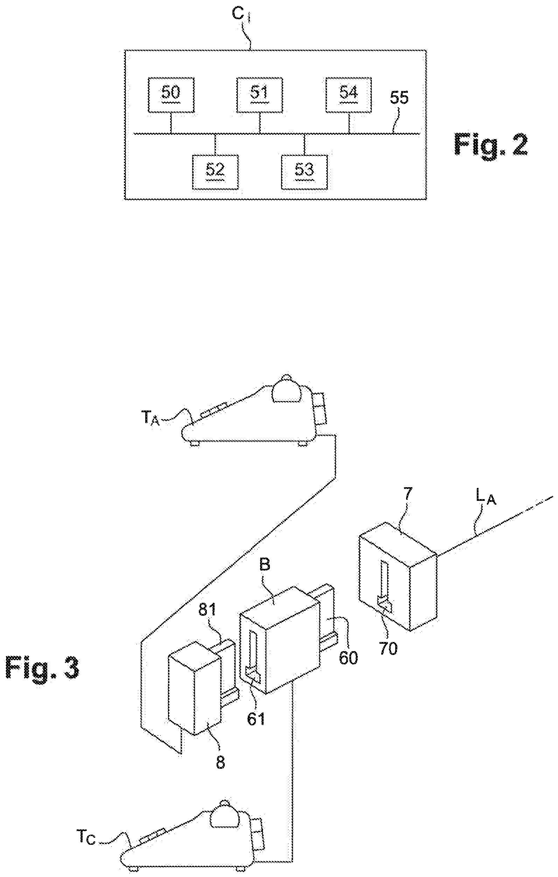

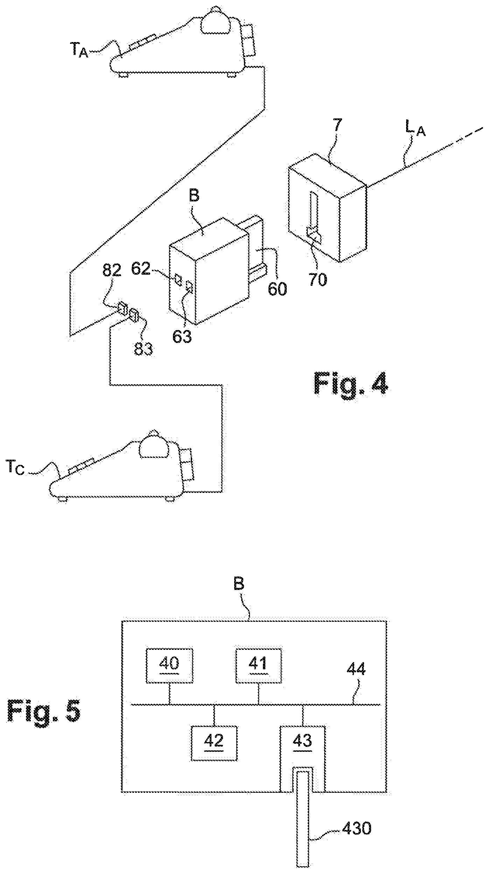

Le boîtier B peut être de dimensions relativement réduites. Sur la figure 3, il se présente avantageusement sous la forme d'une prise gigogne. Il comprend une fiche mâle 60 qui se connecte dans une fiche femelle 70 d'une prise murale 7 située en général dans le local de l'abonné A. Cette prise murale 7 est le point de terminaison de la ligne abonnée L_{A}, c'est-à-dire le point d'accès physique par lequel l'abonné A obtient l'accès au RTC. Le boîtier B comprend également une fiche femelle 61 dans laquelle se connecte la fiche mâle 81 d'une prise en T liée au poste téléphonique fixe T_{A}. Le poste téléphonique fixe T_{C} se connecte au boîtier B par l'intermédiaire d'une connectique du type RJ11 ou RJ45 par exemple. Sur la figure 4, les postes téléphoniques fixes T_{A} et T_{C} se connectent au boîtier B par l'intermédiaire de connectiques 82, 83 du type RJ11 ou RJ45 qui s'insèrent dans des connectiques complémentaires 62, 63 aménagées dans ledit boîtier.

En se rapportant à la figure 5, le boîtier B comprend notamment un ou plusieurs processeurs ou microprocesseurs 40, optionnellement une ou plusieurs mémoires 41, un point d'accès 42, optionnellement une interface de connexion 43 pour carte à puce, carte SIM, ou clé USB, qui sont mutuellement connectées via un bus 44. Une ou plusieurs applications informatiques - ou programmes informatiques - sont enregistrées dans la ou les mémoires 41 ou dans la carte à puce, carte SIM, ou clé USB, et dont les instructions, lorsqu'elles sont exécutées par le ou les processeurs 40 permettent de réaliser les fonctionnalités décrites plus avant dans la description.

La ou les mémoires 41 doivent être considérées comme un dispositif de stockage également adapté pour stocker des données et/ou des fichiers de données. Il peut s'agir d'une mémoire native ou d'une mémoire rapportée telle qu'une carte Secure Digital (SD).

Le point d'accès 42 est une interface de communication filaire ou sans fil adaptée pour établir une communication avec le poste téléphonique fixe T_{C}. Il peut s'agir d'une connexion du type RJ11 ou RJ45 comme illustré sur les figures 3 et 4. Dans le cas où le poste téléphonique fixe T_{C} est un téléphone sans-fil numérique amélioré ou DECT (pour Digital Enhanced Cordless Telecommunications), le point d'accès 42 peut par exemple comprendre un émetteur/récepteur Wifi, une connexion CPL (pour Courant Porteur en Ligne), un module Bluetooth, ou tout autre moyen apte à établir une connexion avec ledit poste téléphonique.

L'interface de connexion 43 est adaptée pour recevoir un support amovible sécurisé 430 (carte à puce, carte SIM, ou clé USB) dans lequel sont enregistrées des données numériques. En pratique, ces données numériques contiennent le numéro de téléphone associé au poste téléphonique fixe (ci-après : le numéro de téléphone de l'abonné C). Ce numéro de téléphone peut être enregistré dans le support amovible sécurisé 430 lorsque l'abonné C acquiert celui-ci auprès d'un organisme dédié. L'interface de connexion 43 est optionnelle dans la mesure où les données numériques précitées peuvent être directement enregistrées dans la ou les mémoires 41 lorsque l'abonné C acquière le boîtier B.

### Premier mode de réalisation

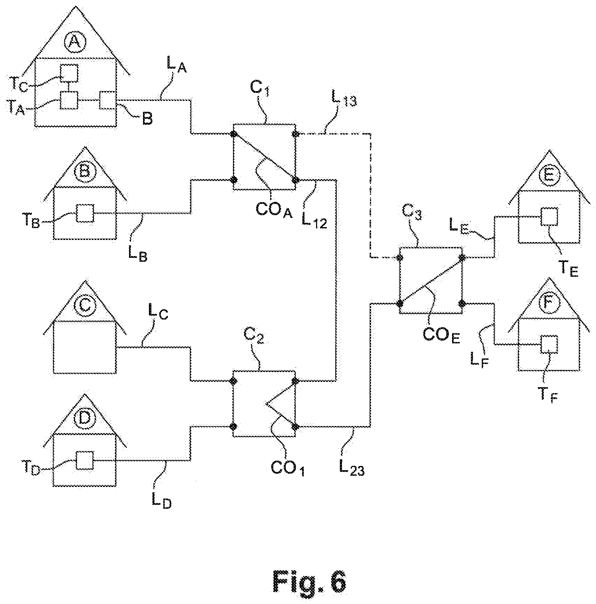

La figure 6 illustre un RTC où l'abonné A loue tout ou une partie de son local à l'abonné C. Le boîtier B est installé dans le local de l'abonné A, en coupure de ligne comme illustré sur les figures 3 et 4. Cette solution présente l'avantage, pour l'abonné A, de conserver son poste téléphonique fixe T_{A}. Le boîtier B peut être installé par l'abonné C lors de son installation dans le local de l'abonné A. Il peut également être installé par l'abonné A, notamment lorsque le boîtier B comprend l'interface de connexion 43. L'abonné C doit alors insérer son support amovible sécurisé 430 dans le boîtier B, lors de son installation dans le local de l'abonné A.

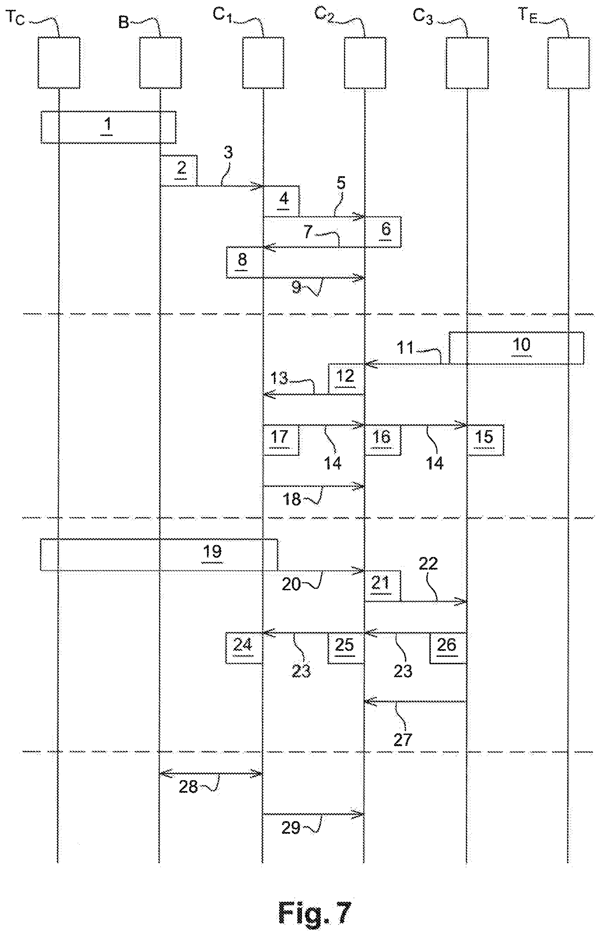

La figure 7 illustre différentes étapes mises en œuvre dans le procédé objet de l'invention et dans le RTC de la figure 6.
- **Evénement 1:** le poste téléphonique fixe T_{C} est connecté au boîtier B. Cette connexion peut être effectuée avant, pendant ou après l'évènement 2. En pratique, l'abonné C est en possession de son poste téléphonique fixe lorsqu'il s'installe chez l'abonné A.
- **Evénement 2:** le boîtier B est connecté dans le local de l'abonné A, en coupure de ligne, sur la prise murale 7. Le cas échéant, l'abonné C insère son support amovible sécurisé 430 dans l'interface de connexion 43 du boîtier B.
- **Etape 3 :** le boîtier B génère et émet une requête de présence au commutateur C₁ auquel est relié le local de l'abonné A. La connexion du boîtier B sur la ligne abonnée L_{A} et/ou l'insertion du support amovible sécurisé 430 dans l'interface de connexion 43, est l'élément déclencheur de la requête de présence. Cette requête de présence est transmise au commutateur C₁ via la ligne abonnée L_{A}. Cette requête contient notamment le numéro de téléphone de l'abonné C.
- **Evénement 4 :** le commutateur C₁ analyse le numéro de téléphone de l'abonné C pour rechercher le commutateur auquel est affilié ce numéro. Les premiers chiffres du numéro de téléphone de l'abonné C donnent l'adresse de routage du commutateur C₂.
- **Etape 5** : le commutateur C₁ génère et transmet au commutateur C₂ une requête d'interrogation visant à vérifier que le numéro de téléphone de l'abonné C est bien affilié au commutateur C₂. L'achèvement de l'évènement 4 est l'élément déclencheur de la requête d'interrogation. Cette requête d'interrogation contient le numéro de téléphone de l'abonné C. La communication entre les commutateurs C₁ et C₂ peut être réalisée par l'intermédiaire de leur interface réseau 52 respective ou par la liaison commutée L₁₂ (figure 6).
- **Evénement 6** : le commutateur C₂ vérifie que le numéro de téléphone de l'abonné C lui est bien est affilié. La réception de la requête d'interrogation est l'élément déclencheur de la procédure de vérification. En pratique, cette vérification consiste à interroger la table mémorisée dans sa base de données.
- **Etape 7** : si le numéro de téléphone de l'abonné C est mémorisé dans la table, le commutateur C₂ génère et transmet au commutateur C₁ un signal d'authentification. L'évènement 6 et l'étape 7 confèrent davantage de sécurité au système mais sont optionnels dans la mesure où ils peuvent être redondants avec l'analyse effectuée durant l'événement 4.
- **Evénement 8 :** en réponse à la réception du signal d'authentification, le commutateur C₁ autorise le rattachement du numéro de téléphone de l'abonné C à la ligne abonnée L_{A}. Cette dernière est donc partagée entre le numéro de téléphone de l'abonné A et le numéro de téléphone de l'abonné C. En d'autres termes, la table enregistrée dans la base de données du commutateur C₁ associe à la ligne abonnée L_{A}, non seulement le numéro du poste téléphonique fixe T_{A} mais également le numéro du poste téléphonique fixe T_{C}. La ligne abonnée L_{A} est donc susceptible de traiter simultanément les appels entrants/sortants associés au numéro de téléphone de l'abonné C et les appels entrants/sortants associés au numéro de téléphone de l'abonné A. L'abonné A peut continuer à émettre et recevoir des appels de manière habituelle depuis son poste téléphonique fixe T_{A}. La réception du signal d'authentification est l'élément déclencheur de ce rattachement. La réception de la requête de présence de l'étape 3 peut être cet élément déclencheur dans le cas où l'évènement 6 et l'étape 7 ne sont pas mis en œuvre.
- **Etape 9 :** le commutateur C₁ génère et transmet au commutateur C₂ un signal de commande lui demandant notamment de systématiquement renvoyer vers le commutateur C₁ les appels entrants correspondant au numéro de téléphone de l'abonné C. Le signal de commande lui demande également de taxer l'abonné C lorsque les appels sortant transitant par le commutateur C₁ sont associés au numéro de téléphone de l'abonné C.

Les étapes et/ou évènements qui suivent concernent le cas d'un appel entrant correspondant au numéro de téléphone de l'abonné C. Par exemple, l'abonné E désire appeler l'abonné C.
- **Evénement 10** : l'abonné E décroche son poste téléphonique T_{E} dans l'intention d'appeler son correspondant C. Le commutateur C₃ détecte le décroché et avertit l'abonné E, par une tonalité continue. L'abonné E compose le numéro téléphonique de l'abonné C, laquelle numérotation est détectée sur la ligne abonnée L_{C}. Le commutateur C₃ détermine la destination de l'appel. Les premiers chiffres du numéro composé donnent l'adresse de routage du commutateur C₂.
- **Etape 11** : le commutateur C₃ établit avec le commutateur C₂ une liaison commutée L₂₃ temporaire, et lui transmet le numéro téléphonique de l'abonné C.
- **Evénement 12** : le commutateur C₂ analyse le numéro transmis et détecte que l'appel est destiné à l'abonné C.
- **Etape 13 :** conformément au signal de commande reçu à l'étape 9, le commutateur C₂ établit avec le commutateur C₁ une liaison commutée L₁₂ temporaire, et lui transmet le numéro téléphonique de l'abonné C.
- **Etape 14 :** lorsque l'abonné C est disponible (i.e. que son poste téléphonique n'est pas occupé), le commutateur C₁ renvoie un message de signalisation vers le commutateur C₂, au travers de la liaison commutée L₁₂, indiquant la progression de l'appel. Le commutateur C₂ renvoie ce message de signalisation vers le commutateur C₃, au travers de la liaison commutée L₂₃.
- **Evénement 15 :** le commutateur C₃ réserve une connexion CO_{E} entre la liaison commutée L₂₃ et la ligne d'abonné L_{E}. Le commutateur C₃ active également la sonnerie du poste téléphonique T_{E} et génère une tonalité de sonnerie vers le commutateur C₂.
- **Evénement 16 :** De même, le commutateur C₂ réserve une connexion CO₁ entre la liaison commutée L₂₃ et la liaison commutée L₁₂. La tonalité de sonnerie est transmise vers le commutateur C₁.
- **Evénement 17:** le commutateur C₁ réserve également une connexion CO_{A} entre la liaison commutée L₁₂ et la ligne d'abonné L_{A}. L'abonné E entend la tonalité correspondant à un retour de sonnerie. Les évènements 15, 16 et 17 peuvent être réalisés simultanément ou pas, pendant ou après l'étape 14.
- **Etape 18** : lorsque l'abonné C décroche le poste téléphonique T_{C}, le commutateur C₁ détecte ce décroché et transmet au commutateur C₂ un signal lui signifiant le début de la communication. Ce signal est retransmis au commutateur C₃ qui peut alors démarrer la taxation de l'abonné E.

Les étapes et/ou évènements qui suivent concernent le cas d'un appel sortant émis depuis le poste téléphonique connecté au boîtier B. Par exemple, l'abonné C désire appeler l'abonné E.
- **Evénement 19** : l'abonné C décroche son poste téléphonique T_{C} dans l'intention d'appeler son correspondant E. Le commutateur C₁ détecte le décroché et avertit l'abonné C, par une tonalité continue. Un signal supplémentaire est transmis sur la ligne abonnée L_{A}, indiquant que c'est ledit poste téléphonique T_{C} qui est décroché. Ce signal peut notamment contenir le numéro de l'abonné C. Ce dernier compose le numéro téléphonique de l'abonné E, laquelle numérotation est détectée sur la ligne abonnée L_{A}.
- **Etape 20 :** le commutateur C₁ établit avec le commutateur C₂ une liaison commutée L₁₂ temporaire, et lui transmet le numéro téléphonique de l'abonné E. Le commutateur C₁ transmet également au commutateur C₂ un signal lui indiquant que l'appel sortant est associé au numéro de téléphone de l'abonné C.
- **Evénement 21** : le commutateur C₂ analyse le numéro transmis et détecte que l'appel provient de l'abonné C. Le commutateur C₂ détermine la destination de l'appel, les premiers chiffres du numéro téléphonique de l'abonné E donnant l'adresse de routage du commutateur C₃. Conformément au signal de commande reçu à l'étape 9, le commutateur C₂ mettra en œuvre le processus de taxation de l'abonné C si l'appel de l'abonné E aboutit.
- **Etape 22** : le commutateur C₂ établit avec le commutateur C₃ une liaison commutée L₂₃ temporaire, et lui transmet le numéro téléphonique de l'abonné E.
- **Etape 23** : lorsque l'abonné E est disponible (i.e. que son poste téléphonique T_{E} n'est pas occupé), le commutateur C₃ renvoie un message de signalisation vers le commutateur C₂, au travers de la liaison commutée L₂₃, indiquant la progression de l'appel. Le commutateur C₂ renvoie ce message de signalisation vers le commutateur C₁, au travers de la liaison commutée L₁₂.
- **Evénement 24** : le commutateur C₁ réserve une connexion CO_{A} entre la liaison commutée L₁₂ et la ligne d'abonné L_{A}. Le commutateur C₁ active également la sonnerie du poste téléphonique T_{C} et génère une tonalité de sonnerie vers le commutateur C₂.
- **Evénement 25** : De même, le commutateur C₂ réserve une connexion CO₁ entre la liaison commutée L₁₂ et la liaison commutée L₂₃. La tonalité de sonnerie est transmise vers le commutateur C₃.
- **Evénement 26:** le commutateur C₃ réserve également une connexion CO_{E} entre la liaison commutée L₂₃ et la ligne d'abonné L_{E}. L'abonné C entend la tonalité correspondant à un retour de sonnerie. Les évènements 24, 25 et 26 peuvent être réalisés simultanément ou pas, pendant ou après l'étape 23.
- **Etape 27** : lorsque l'abonné E décroche le poste téléphonique T_{E}, le commutateur C₃ détecte ce décroché et transmet au commutateur C₂ un signal lui signifiant le début de la communication qui peut alors démarrer la taxation de l'abonné C.

Les étapes et/ou événements qui suivent concernent la déconnexion du boîtier B et/ou le retrait du support amovible sécurisé 430.
- **Etape 28** : lorsque le boîtier B est déconnecté de la prise murale 7 et/ou que le support amovible sécurisé 430 est retiré de l'interface de connexion 43, ledit boîtier et/ou ledit support amovible sécurisé, génère et émet un signal de déconnexion au commutateur C₁. La déconnexion du boîtier B et/ou le retrait du support amovible sécurisé 430, est donc l'élément déclencheur du signal de déconnexion. Le boîtier B et/ou le support amovible sécurisé 430 peut par exemple émettre automatiquement ce signal de déconnexion. Ce signal de déconnexion est transmis via la ligne abonnée L_{A}. Le commutateur C₁ peut également interroger le boîtier B et/ou le support amovible sécurisé 430, en lui transmettant périodiquement des requêtes de présence (« es-tu présent ? »). Tant que le boîtier B et/ou le support amovible sécurisé 430 répond à ces requêtes, le commutateur C₁ en déduit que ledit boîtier est bien connecté à la prise murale 7 et/ou que le support amovible sécurisé 430 est bien inséré dans l'interface de connexion 43. Et en l'absence de réponse, le commutateur C₁ en déduit que le boîtier B est déconnecté de la prise murale 7 et/ou que le support amovible sécurisé 430 est retiré de l'interface de connexion 43. Dans une autre variante de réalisation, c'est le boîtier B et/ou le support amovible sécurisé 430 qui transmet périodiquement au commutateur C₁ des messages de présence (« je suis présent »). Tant que le commutateur C₁ reçoit ces messages, il en déduit que le boîtier B est bien connecté à la prise murale 7 et/ou que le support amovible sécurisé 430 est bien inséré dans l'interface de connexion 43. Et en l'absence de réception de ces messages, le commutateur C₁ en déduit que le boîtier B est déconnecté de la prise murale 7 et/ou que le support amovible sécurisé 430 est retiré de l'interface de connexion 43.
- **Etape 29** : lorsque le commutateur C₁ est informé de la déconnexion du boîtier B et/ou du retrait du support amovible sécurisé 430, il génère et transmet au commutateur C₂, un signal de fermeture de session. La réception du signal de déconnexion est l'élément déclencheur du signal de fermeture de session. Le commutateur C₁ cesse de gérer les appels correspondant au numéro de téléphone de l'abonné C, qui sont alors repris en charge, de manière classique, par le commutateur C₂.

### Second mode de réalisation

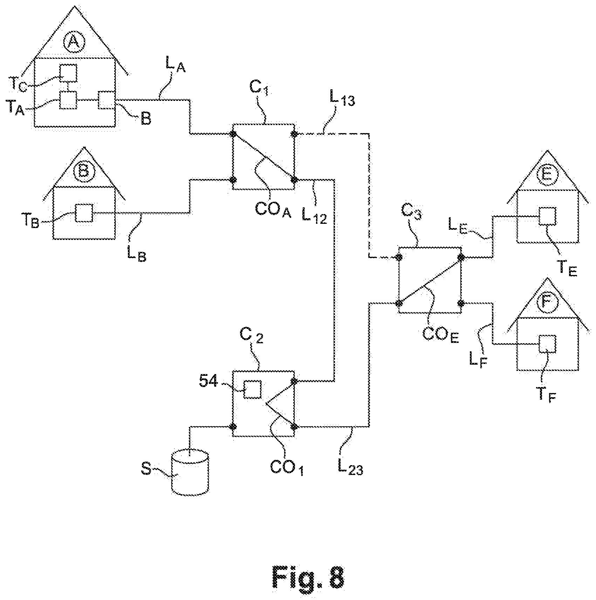

La figure 8 illustre un RTC où le commutateur C₂ n'est rattaché à aucune ligne abonnée. Il s'agit d'un commutateur mutualisé entre plusieurs abonnés, notamment l'abonné C. Ce commutateur C₂ est géré par un serveur informatique S distant. La base de données 54 du commutateur C₂ contient tous les numéros de téléphones des abonnés mutualisés et inscrits auprès du serveur S, dont le numéro de l'abonné C.

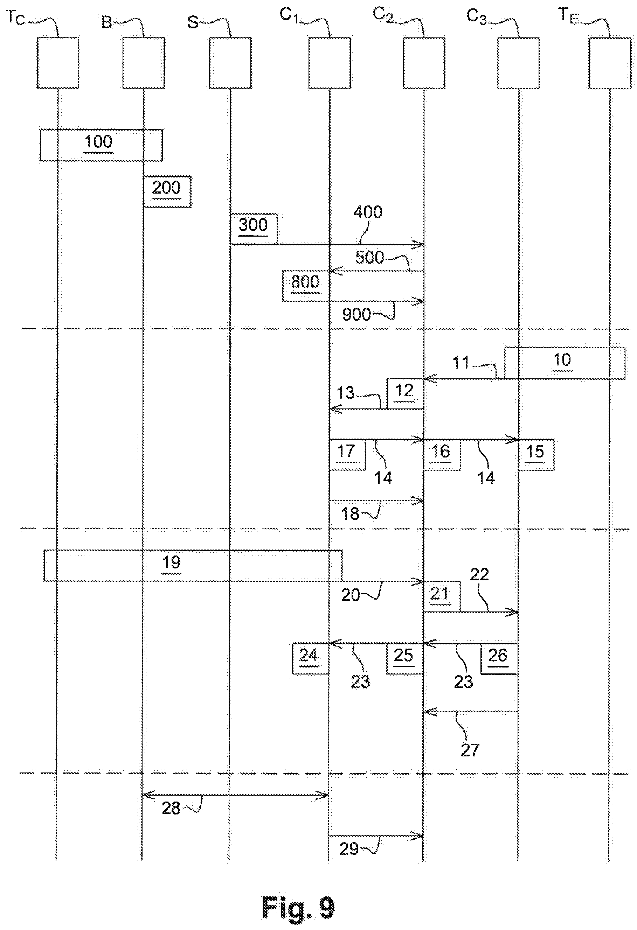

La figure 9 illustre différentes étapes mises en œuvre dans le procédé objet de l'invention et dans le RTC de la figure 8.
- **Evénement 100:** le poste téléphonique fixe T_{C} est connecté au boîtier B. Cette connexion peut être effectuée avant, pendant ou après l'évènement 2. En pratique, l'abonné C est en possession de son poste téléphonique fixe T_{C} lorsqu'il s'installe chez l'abonné A.
- **Evénement 200:** le boîtier B est connecté dans le local de l'abonné A, en coupure de ligne, sur la prise murale 7. Le cas échéant, l'abonné C insère son support amovible sécurisé 430 dans l'interface de connexion 43 du boîtier B.
- **Evénement 300:** l'abonné C se signale et s'authentifie auprès du serveur S. Ce signalement peut être effectué par tout moyen tel que : appel téléphonique vers le serveur S, par l'intermédiaire d'un Smartphone de l'abonné C ou du poste téléphonique fixe T_{A} ou T_{C} ; enregistrement en ligne de l'abonné C auprès du serveur S, actionnement d'un bouton dédié aménagé sur le boîtier B, etc. L'abonné C accède ainsi au serveur S et lui communique un identifiant (ex : login et/ou mot de passe) pour son authentification. L'abonné C communique également au serveur S, le numéro de téléphone associé au poste téléphonique fixe T_{A} de l'abonné A. Ce numéro de téléphone peut être renseigné manuellement par l'abonné C via une interface de communication accessible depuis le serveur S. Le numéro de téléphone de l'abonné A peut également être transmis automatiquement au serveur S, par exemple lors de l'accès audit serveur depuis le poste téléphonique fixe T_{A} ou T_{C}. Le serveur reconnait alors automatiquement ce numéro de téléphone et authentifie l'abonné C en vérifiant en outre les données numériques (notamment le numéro de téléphone de l'abonné C) contenues dans la mémoire 41 du boîtier B et/ou dans le support amovible sécurisé 430.
- **Etape 400** : le serveur S génère et émet une instruction de commande au commutateur C₂ pour que ce dernier transmette au commutateur C₁ une requête de présence.
- **Etape 500** : le commutateur C₂ génère et émet la requête de présence au commutateur C₁ auquel est relié le local de l'abonné A. La réception de l'instruction de commande est l'élément déclencheur de la requête de présence. Cette requête de présence contient le numéro de téléphone de l'abonné C. La communication entre les commutateurs C₁ et C₂ peut être réalisée par l'intermédiaire de leur interface réseau 52 respective ou par la liaison commutée L₁₂.
- **Evénement 800** : en réponse à la réception de la requête de présence, le commutateur C₁ autorise le rattachement du numéro de téléphone de l'abonné C à la ligne abonnée L_{A}. Cette dernière est donc partagée entre le numéro de téléphone de l'abonné A et le numéro de téléphone de l'abonné C. En d'autres termes, la table enregistrée dans la base de données du commutateur C₁ associe à la ligne abonnée L_{A}, non seulement le numéro du poste téléphonique fixe T_{A} mais également le numéro du poste téléphonique fixe T_{C}. La ligne abonnée L_{A} est donc susceptible de traiter simultanément les appels entrants/sortants associés au numéro de téléphone de l'abonné C et les appels entrants/sortants associés au numéro de téléphone de l'abonné A. L'abonné A peut continuer à émettre et recevoir des appels de manière habituelle depuis son poste téléphonique fixe T_{A}. La réception du signal d'authentification est l'élément déclencheur de ce rattachement. La réception de la requête de présence de l'étape 3 peut être cet élément déclencheur dans le cas où l'événement 6 et l'étape 7 ne sont pas mis en œuvre.
- **Etape 900** : le commutateur C₁ génère et transmet au commutateur C₂ un signal de commande lui demandant notamment de systématiquement renvoyer vers le commutateur C₁ les appels entrants correspondant au numéro de téléphone de l'abonné C. Le signal de commande lui demande également de taxer l'abonné C lorsque les appels sortant transitant par le commutateur C₁ sont associés au numéro de téléphone de l'abonné C.

Les étapes et événements 10 à 29 décrits précédemment en référence aux figures 6 et 7 s'appliquent également à ce second mode de réalisation.

Dans ce second mode de réalisation, l'abonné C peut également récupérer des attributs privés de connexion internet pour accéder à des services complémentaires auquel il est abonné. En effet, l'abonné C est maintenant localisé et authentifié sur la ligne abonnée L_{A}. Le serveur S peut alors permettre à tout ou partie des équipements informatiques (tablettes, PC, Box TV, ...) connectés à la desserte internet liée à la ligne abonnée L_{A} de recevoir les services complémentaires auquel l'abonné C est abonné (droits d'accès à des chaines de télévisions payantes, Vidéos à la demande, ...).

## Revendications

1. Réseau téléphonique commuté (RTC) dans lequel :
- un premier commutateur (C₁) est connecté à une première ligne abonnée (L_{A}) adaptée pour être reliée à un premier poste téléphonique fixe (T_{A}) installé dans un local d'un premier abonné (A), ladite première ligne abonnée étant associée à un numéro de téléphone attribué audit premier poste téléphonique,
- un deuxième commutateur (C₂) comprenant une base de données (54) dans laquelle est enregistré un numéro de téléphone attribué à un deuxième poste téléphonique fixe (T_{C}) d'un deuxième abonné (C),
**caractérisé en ce que** ledit réseau comprend en outre:
- un boîtier (B) amovible connecté sur la première ligne abonnée (L_{A}), dans le local où est installé le premier poste téléphonique (T_{A}), le deuxième poste téléphonique (T_{C}) étant connecté audit boîtier,
- un moyen (B, S) pour transmettre au premier commutateur (C₁) une requête de présence contenant le numéro de téléphone attribué au deuxième poste téléphonique (T_{C}),
- la réception de la requête de présence par le premier commutateur (C₁) entraîne la mise en œuvre automatique d'un processus informatique logique impliquant le deuxième commutateur (C₂) et aboutissant au partage de la première ligne abonnée (L_{A}), au travers du boîtier (B), entre le numéro de téléphone attribué au premier poste téléphonique (T_{A}) et le numéro de téléphone attribué au deuxième poste téléphonique (T_{C}).

2. Réseau téléphonique commuté selon la revendication 1, dans lequel la réception de la requête de présence par le premier commutateur (C₁) entraîne l'émission d'un signal commandant le deuxième commutateur (C₂) pour qu'il renvoie vers ledit premier commutateur les appels entrants correspondant au numéro de téléphone attribué au deuxième poste téléphonique (T_{C}).

3. Réseau téléphonique commuté selon la revendication 2, dans lequel le deuxième commutateur (C₂) établit une liaison commutée (L₁₂) temporaire entre les deux commutateurs (C₁, C₂) lorsque ledit deuxième commutateur reçoit un appel entrant correspondant au numéro de téléphone attribué au deuxième poste téléphonique (T_{C}).

4. Réseau téléphonique commuté selon l'une des revendications 1 à 3, dans lequel la requête de présence est émise par le boitier (B) au travers de la première ligne abonnée (L_{A}).

5. Réseau téléphonique commuté selon l'une des revendications 1 à 3, dans lequel la requête de présence est émise par le deuxième commutateur (C₂), en réponse à une instruction de commande émise par un serveur informatique distant (S).

6. Réseau téléphonique commuté selon la revendication 5, dans lequel l'instruction de commande est émise par le serveur informatique distant (S), en réponse à un signalement et une authentification du deuxième abonné (C) auprès dudit serveur.

7. Réseau téléphonique commuté selon l'une des revendications précédentes, dans lequel la réception de la requête de présence par le premier commutateur (C₁) entraîne l'émission d'un signal commandant le deuxième commutateur (C₂) pour qu'il mette en œuvre automatiquement un processus de taxation du deuxième abonné (C) lorsqu'un appel sortant est émis depuis le deuxième poste téléphonique (T_{C}) connecté au boîtier (B).

8. Réseau téléphonique commuté selon la revendication 7, dans lequel :
- le décroché du deuxième poste téléphonique (T_{C}) entraîne la transmission d'un signal émis par le boîtier (B), au premier commutateur (C₁), et au travers de la première ligne abonnée (L_{A}),
- la réception dudit signal par le premier commutateur (C₁) entraîne la mise en œuvre automatique d'un processus informatique logique aboutissant à l'établissement d'une liaison commutée (L₁₂) temporaire entre les deux commutateurs (C₁, C₂) de sorte que le deuxième commutateur (C₂) traite les appels sortants émis depuis le deuxième poste téléphonique (T_{C}) connecté au boîtier (B).

9. Réseau téléphonique commuté selon l'une des revendications précédentes, dans lequel :
- le numéro de téléphone attribué au deuxième poste téléphonique (T_{C}) est enregistré dans un support amovible sécurisé (430),
- le boîtier (B) est équipé d'une interface de connexion (43) adaptée pour recevoir le support amovible sécurisé (430).

10. Réseau téléphonique commuté selon la revendication 9, dans lequel l'insertion du support amovible sécurisé (430) dans l'interface de connexion (43) entraine la transmission de la requête de présence par le boîtier (B).

11. Réseau téléphonique commuté selon l'une des revendications 9 ou 10, dans lequel le retrait du support amovible sécurisé (430) de l'interface de connexion (43) entraine la mise en œuvre automatique d'un processus informatique logique conduisant à l'arrêt du partage de la première ligne abonnée (L_{A}).

12. Réseau téléphonique commuté selon l'une des revendications 1 à 10, dans lequel la déconnexion du boîtier (B) de la première ligne abonnée (L_{A}) entraine la mise en œuvre automatique d'un processus informatique logique conduisant à l'arrêt du partage de ladite première ligne abonnée.

13. Réseau téléphonique commuté selon l'une des revendications 1 à 12, dans lequel le boîtier (B) se présente sous la forme d'une prise gigogne, et comprend :
- une fiche mâle (60) adaptée pour se connecter dans une fiche femelle (70) d'une prise murale (7) située dans le local du premier abonné (A), laquelle prise murale est reliée à la première ligne abonnée (L_{A}),
- une fiche femelle (61) adaptée pour recevoir la fiche mâle (81) d'une prise en T liée au premier poste téléphonique (T_{A}),
- une connectique à laquelle se connecte le deuxième poste téléphonique (T_{C}).

14. Réseau téléphonique commuté selon l'une des revendications 1 à 12, dans lequel le boîtier (B) se présente sous la forme d'une prise gigogne, et comprend :
- une fiche mâle (60) adaptée pour se connecter dans une fiche femelle (70) d'une prise murale (7) située dans le local du premier abonné (A), laquelle prise murale est reliée à la première ligne abonnée (L_{A}),
- une connectique (62) à laquelle se connecte le premier poste téléphonique (T_{A}),
- une connectique (63) à laquelle se connecte le deuxième poste téléphonique (T_{C}).

15. Procédé de gestion d'une ligne abonnée dans un réseau téléphonique commuté, lequel réseau comprend:
- un premier commutateur (C₁) connecté à une première ligne abonnée (L_{A}) adaptée pour être reliée à un premier poste téléphonique fixe (T_{A}) installé dans un local d'un premier abonné (A), ladite première ligne abonnée étant associée à un numéro de téléphone attribué audit premier poste téléphonique,
- un deuxième commutateur (C₂) comprenant une base de données (54) dans laquelle est enregistrée un numéro de téléphone attribué à un deuxième poste téléphonique fixe (T_{C}) d'un deuxième abonné (C),
**caractérisé en ce que** le procédé comprend les étapes consistant à :
- connecter un boîtier (B) amovible sur la première ligne abonnée (L_{A}), dans le local où est installé le premier poste téléphonique (T_{A}),
- connecter le deuxième poste téléphonique (T_{C}) au boîtier (B),
- transmettre au premier commutateur (C₁) une requête de présence contenant le numéro de téléphone attribué au deuxième poste téléphonique (T_{C}),
- la réception de la requête de présence par le premier commutateur (C₁) entraîne la mise en œuvre automatique d'un processus informatique logique impliquant le deuxième commutateur (C₂) et aboutissant au partage de la première ligne abonnée (L_{A}), au travers du boîtier (B), entre le numéro de téléphone attribué au premier poste téléphonique (T_{A}) et le numéro de téléphone attribué au deuxième poste téléphonique (T_{C}).

## Patentansprüche

1. Telefonwählnetz (RTC), bei dem:
- eine erste Vermittlungsstelle (C₁) an eine erste Teilnehmerleitung (L_{A}) angeschlossen ist, die geeignet ist, mit einem ersten Festnetztelefonapparat (T_{A}) verbunden zu werden, der in einem Raum eines ersten Teilnehmers (A) installiert ist, wobei die erste Teilnehmerleitung einer dem ersten Telefonapparat zugeteilten Telefonnummer zugeordnet ist,
- eine zweite Vermittlungsstelle (C₂), die eine Datenbank (54) enthält, in der eine Telefonnummer gespeichert ist, die einem zweiten Festnetztelefonapparat (T_{C}) eines zweiten Teilnehmers (C) zugewiesen ist,
**dadurch gekennzeichnet, dass** das Netz außerdem enthält:
- eine entfernbare Dose (B), die an die erste Teilnehmerleitung (L_{A}) angeschlossen ist, in dem Raum, in dem der erste Telefonapparat (T_{A}) installiert ist, wobei der zweite Telefonapparat (T_{C}) an die Dose angeschlossen ist,
- eine Einrichtung (B, S), um an die erste Vermittlungsstelle (C₁) eine Anwesenheitsanfrage zu übertragen, die die dem zweiten Telefonapparat (T_{C}) zugeteilte Telefonnummer enthält,
- der Empfang der Anwesenheitsanfrage durch die erste Vermittlungsstelle (C₁) bewirkt die automatische Durchführung eines logischen Informatikprozesses, der die zweite Vermittlungsstelle (C₂) mit einbezieht und zur gemeinsamen Nutzung der ersten Teilnehmerleitung (L_{A}) über die Dose (B) zwischen der dem ersten Telefonapparat (T_{A}) zugeteilten Telefonnummer und der dem zweiten Telefonapparat (T_{C}) zugeteilten Telefonnummer führt.

2. Telefonwählnetz nach Anspruch 1, wobei der Empfang der Anwesenheitsanfrage durch die erste Vermittlungsstelle (C₁) das Senden eines Signals bewirkt, das die zweite Vermittlungsstelle (C₂) steuert, damit sie die eingehenden Anrufe an die erste Vermittlungsstelle weiterleitet, die der dem zweiten Telefonapparat (T_{C}) zugeteilten Telefonnummer entsprechen.

3. Telefonwählnetz nach Anspruch 2, wobei die zweite Vermittlungsstelle (C₂) eine temporäre Wählverbindung (L₁₂) zwischen den zwei Vermittlungsstellen (C₁, C₂) aufbaut, wenn die zweite Vermittlungsstelle einen eingehenden Anruf empfängt, der der dem zweiten Telefonapparat (T_{C}) zugeteilten Telefonnummer entspricht.

4. Telefonwählnetz nach einem der Ansprüche 1 bis 3, wobei die Anwesenheitsanfrage von der Dose (B) über die erste Teilnehmerleitung (L_{A}) ausgegeben wird.

5. Telefonwählnetz nach einem der Ansprüche 1 bis 3, wobei die Anwesenheitsanfrage von der zweiten Vermittlungsstelle (C₂) als Antwort auf einen von einem fernen Informatikserver (S) ausgegebene Steuerbefehl ausgegeben wird.

6. Telefonwählnetz nach Anspruch 5, wobei der Steuerbefehl vom fernen Informatikserver (S) als Antwort auf eine Signalisierung und eine Authentifizierung des zweiten Teilnehmers (C) beim Server ausgegeben wird.

7. Telefonwählnetz nach einem der vorhergehenden Ansprüche, wobei der Empfang der Anwesenheitsanfrage durch die erste Vermittlungsstelle (C₁) die Ausgabe eines Signals bewirkt, das die zweite Vermittlungsstelle (C₂) steuert, damit sie automatisch einen Prozess der Gebührenerfassung des zweiten Teilnehmers (C) durchführt, wenn ein ausgehender Anruf vom mit der Dose (B) verbundenen zweiten Telefonapparat (T_{C}) ausgegeben wird.

8. Telefonwählnetz nach Anspruch 7, wobei:
- das Abheben des zweiten Telefonapparats (T_{C}) die Übertragung eines von der Dose (B) ausgegebenen Signals an die erste Vermittlungsstelle (C₁) und über die erste Teilnehmerleitung (L_{A}) bewirkt,
- der Empfang des Signals durch die erste Vermittlungsstelle (C₁) die automatische Durchführung eines logischen Informatikprozesses bewirkt, der zum Aufbau einer temporären Wählverbindung (L₁₂) zwischen den zwei Vermittlungsstellen (C₁, C₂) führt, so dass die zweite Vermittlungsstelle (C₂) die ausgehenden Anrufe verarbeitet, die vom an die Dose (B) angeschlossenen zweiten Telefonapparat (T_{C}) ausgegeben werden.

9. Telefonwählnetz nach einem der vorhergehenden Ansprüche, wobei:
- die dem zweiten Telefonapparat (T_{C}) zugeteilte Telefonnummer in einem gesicherten entfernbaren Träger (430) gespeichert wird,
- die Dose (B) mit einer Anschlussschnittstelle (43) ausgestattet ist, die geeignet ist, den gesicherten entfernbaren Träger (430) aufzunehmen.

10. Telefonwählnetz nach Anspruch 9, wobei die Einfügung des gesicherten entfernbaren Trägers (430) in die Anschlussschnittstelle (43) die Übertragung der Anwesenheitsanfrage durch die Dose (B) bewirkt.

11. Telefonwählnetz nach einem der Ansprüche 9 oder 10, wobei das Herausziehen des gesicherten entfernbaren Trägers (430) aus der Anschlussschnittstelle (43) die automatische Durchführung eines logischen Informatikprozesses bewirkt, der zur Beendigung der gemeinsamen Nutzung der ersten Teilnehmerleitung (L_{A}) führt.

12. Telefonwählnetz nach einem der Ansprüche 1 bis 10, wobei das Trennen der Dose (B) von der ersten Teilnehmerleitung (L_{A}) die automatische Durchführung eines logischen Informatikprozesses bewirkt, der zur Beendigung der gemeinsamen Nutzung der ersten Teilnehmerleitung führt.

13. Telefonwählnetz nach einem der Ansprüche 1 bis 12, wobei die Dose (B) in Form eines Zwischensteckers vorliegt und enthält:
- einen Stecker (60), der geeignet ist, in einer Steckbuchse (70) einer Wandsteckdose (7) angeschlossen zu werden, die sich im Raum des ersten Teilnehmers (A) befindet, wobei die Wandsteckdose mit der ersten Teilnehmerleitung (L_{A}) verbunden ist,
- eine Steckbuchse (61), die geeignet ist, den Stecker (81) einer T-Steckvorrichtung aufzunehmen, die mit dem ersten Telefonapparat (T_{A}) verbunden ist,
- eine Anschlusseinrichtung, an die der zweite Telefonapparat (T_{C}) angeschlossen wird.

14. Telefonwählnetz nach einem der Ansprüche 1 bis 12, wobei die Dose (B) in Form eines Zwischensteckers vorliegt und enthält:
- einen Stecker (60), der geeignet ist, in einer Steckbuchse (70) einer Wandsteckdose (7) angeschlossen zu werden, die sich im Raum des ersten Teilnehmers (A) befindet, wobei die Wandsteckdose mit der ersten Teilnehmerleitung (L_{A}) verbunden ist,
- eine Anschlusseinrichtung (62), an die der erste Telefonapparat (T_{A}) angeschlossen ist,
- eine Anschlusseinrichtung (63), an die der zweite Telefonapparat (T_{C}) angeschlossen ist.

15. Verfahren zur Verwaltung einer Teilnehmerleitung in einem Telefonwählnetz, wobei das Netz enthält:
- eine erste Vermittlungsstelle (C₁), angeschlossen an eine erste Teilnehmerleitung (L_{A}), die geeignet ist, mit einem ersten Festnetztelefonapparat (T_{A}) verbunden zu werden, der in einem Raum eines ersten Teilnehmers (A) installiert ist, wobei die erste Teilnehmerleitung einer dem ersten Telefonapparat zugeteilten Telefonnummer zugeordnet ist,
- eine zweite Vermittlungsstelle (C₂), die eine Datenbank (54) enthält, in der eine Telefonnummer gespeichert ist, die einem zweiten Festnetztelefonapparat (T_{C}) eines zweiten Teilnehmers (C) zugeteilt ist,
**dadurch gekennzeichnet, dass** das Verfahren die Schritte enthält, die darin bestehen:
- eine entfernbare Dose (B) an die erste Teilnehmerleitung (L_{A}) in dem Raum anzuschließen, in dem der erste Telefonapparat (T_{A}) installiert ist,
- den zweiten Telefonapparat (T_{C}) an die Dose (B) anzuschließen,
- an die erste Vermittlungsstelle (C₁) eine Anwesenheitsanfrage zu übertragen, die die dem zweiten Telefonapparat (T_{C}) zugeteilte Telefonnummer enthält,
- der Empfang der Anwesenheitsanfrage durch die erste Vermittlungsstelle (C₁) bewirkt die automatische Durchführung eines logischen Informatikprozesses, der die zweite Vermittlungsstelle (C₂) mit einbezieht und zur gemeinsamen Nutzung der ersten Teilnehmerleitung (L_{A}) über die Dose (B) zwischen der dem ersten Telefonapparat (T_{A}) zugeteilten Telefonnummer und der dem zweiten Telefonapparat (T_{C}) zugeteilten Telefonnummer führt.

## Claims

1. Switched telephone network (STN) wherein:
- a first switch (C₁) is connected to a first subscriber line (L_{A}) suitable for being linked to a first landline telephone set (T_{A}) installed on a premises of a first subscriber (A), said first subscriber line being associated with a telephone number assigned to said first telephone set,
- a second switch (C₂) comprising a database (54) in which a telephone number assigned to a second landline telephone set (T_{C}) of a second subscriber (C) is stored,
**characterized in that** said network furthermore comprises:
- a removable module (B) connected to the first subscriber line (L_{A}), on the premises where the first telephone set (T_{A}) is installed, the second telephone set (T_{C}) being connected to said module,
- a means (B, S) for transmitting to the first switch (C₁) a presence request containing the telephone number assigned to the second telephone set (T_{C}),
- the receiving of the presence request by the first switch (C₁) brings about the automatic implementation of a logical computing process involving the second switch (C₂) and resulting in the sharing of the first subscriber line (L_{A}), through the module (B), between the telephone number assigned to the first telephone set (T_{A}) and the telephone number assigned to the second telephone set (T_{C}).

2. Switched telephone network according to Claim 1, wherein the receiving of the presence request by the first switch (C₁) brings about the transmission of a signal controlling the second switch (C₂) so that it redirects to said first switch the incoming calls corresponding to the telephone number assigned to the second telephone set (T_{C}).

3. Switched telephone network according to Claim 2, wherein the second switch (C₂) establishes a temporary switched link (L₁₂) between the two switches (C₁, C₂) when said second switch receives an incoming call corresponding to the telephone number assigned to the second telephone set (T_{C}).

4. Switched telephone network according to one of Claims 1 to 3, wherein the presence request is transmitted by the module (B) through the first subscriber line (L_{A}).

5. Switched telephone network according to one of Claims 1 to 3, wherein the presence request is transmitted by the second switch (C₂), in response to a control instruction transmitted by a remote computing server (S).

6. Switched telephone network according to Claim 5, wherein the control instruction is transmitted by the remote computing server (S), in response to a signalling and an authentication of the second subscriber (C) at said server.

7. Switched telephone network according to one of the preceding claims, wherein the receiving of the presence request by the first switch (C₁) brings about the transmission of a signal controlling the second switch (C₂) so that it automatically implements a process of charging the second subscriber (C) when an outgoing call is transmitted from the second telephone set (T_{C}) connected to the module (B).

8. Switched telephone network according to Claim 7, wherein:
- the picking up of the second telephone set (T_{C}) brings about the transmission of a signal transmitted by the module (B), to the first switch (C₁), and through the first subscriber line (L_{A}),
- the receiving of said signal by the first switch (C₁) brings about the automatic implementation of a logical computing process resulting in the establishment of a temporary switched link (L₁₂) between the two switches (C₁, C₂) such that the second switch (C₂) processes the outgoing calls transmitted from the second telephone set (T_{C}) connected to the module (B).

9. Switched telephone network according to one of the preceding claims, wherein:
- the telephone number assigned to the second telephone set (T_{C}) is stored on a secure removable medium (430),
- the module (B) is equipped with a connection interface (43) suitable for receiving the secure removable medium (430).

10. Switched telephone network according to Claim 9, wherein the insertion of the secure removable medium (430) into the connection interface (43) brings about the transmission of the presence request by the module (B) .

11. Switched telephone network according to either of Claims 9 and 10, wherein the withdrawal of the secure removable medium (430) from the connection interface (43) brings about the automatic implementation of a logical computing process leading to the stopping of the sharing of the first subscriber line (L_{A}).

12. Switched telephone network according to one of Claims 1 to 10, wherein the disconnection of the module (B) from the first subscriber line (L_{A}) brings about the automatic implementation of a logical computing process leading to the stopping of the sharing of said first subscriber line.

13. Switched telephone network according to one of Claims 1 to 12, wherein the module (B) is in the form of a nesting plug, and comprises:
- a male connector (60) suitable for being connected in a female connector (70) of a wall plug (7) located on the premises of the first subscriber (A), which wall plug is linked to the first subscriber line (L_{A}),
- a female connector (61) suitable for receiving the male connector (81) of a T plug linked to the first telephone set (T_{A}),
- a connector to which the second telephone set (T_{C}) is connected.

14. Switched telephone network according to one of Claims 1 to 12, wherein the module (B) is in the form of a nesting plug, and comprises:
- a male connector (60) suitable for being connected in a female connector (70) of wall plug (7) located on the premises of the first subscriber (A), which wall plug is linked to the first subscriber line (L_{A}),
- a connector (62) to which the first telephone set (T_{A}) is connected,
- a connector (63) to which the second telephone set (T_{C}) is connected.

15. Method for managing a subscriber line in a switched telephone network, which network comprises:
- a first switch (C₁) connected to a first subscriber line (L_{A}) suitable for being linked to a first landline telephone set (T_{A}) installed on a premises of a first subscriber (A), said first subscriber line being associated with a telephone number assigned to said first telephone set,
- a second switch (C₂) comprising a database (54) in which a telephone number assigned to a second landline telephone set (T_{C}) of a second subscriber (C) is stored,
**characterized in that** the method comprises the steps of:
- connecting a removable module (B) to the first subscriber line (L_{A}), on the premises where the first telephone set (T_{A}) is installed,
- connecting the second telephone set (T_{C}) to the module (B),
- transmitting to the first switch (C₁) a presence request containing the telephone number assigned to the second telephone set (T_{C}),
- the receiving of the presence request by the first switch (C₁) brings about the automatic implementation of a logical computing process involving the second switch (C₂) and resulting in the sharing of the first subscriber line (L_{A}), through the module (B), between the telephone number assigned to the first telephone set (T_{A}) and the telephone number assigned to the second telephone set (T_{C}).
